# EUROPEAN PATENT APPLICATION

(11) **EP 1 703 431 A2**
(43) Date of publication of application: **20.09.2006**
(21) Application number: 06111042.5
(22) Date of filing: 13.03.2006
(51) Int. Cl.: G06F 21/00

(54) **Display device, control method thereof, electronic device including display device, display device control program, and recording medium on which display device control program is recorded**

(30) Priority: 15.03.2005 JP 2005074077
(71) Applicant: OMRON CORPORATION, Kyoto-shi, Kyoto 600-8530 (JP)
(72) Inventor: Inoue, Tomohiro OMRON Corporation, Shiokoji-dori, Shimogyo-ku Kyoto 600-853 (JP); Kakiuchi, Takashi OMRON Corporation, Shiokoji-dori, Shimogyo-ku Kyoto 600-853 (JP); Senga, Masahiro OMRON Corporation, Shiokoji-dori, Shimogyo-ku Kyoto 600-853 (JP)
(74) Representative: Weihs, Bruno Konrad

(57) **Abstract**

An ATM has a display section of a touch panel and a security camera that takes an image of at least an area from which display information on the display section is viewable. After a predetermined waiting time, the security camera takes an image. From the taken image, human faces are detected, and how many human faces are detected is counted. If the number of human faces is one, the display is carried out as peeping is not underway according to the judgment. Meanwhile, if a plurality of human faces are detected, the display is stopped as peeping is underway according to the judgment.

## Description

### FIELD OF THE INVENTION

The present invention relates to a display device including display means, a control method of the display device, an electronic device including the display device, a display device control program, and a recording medium on which the program is recorded. The present invention particularly relates to a display device which prevents information displayed on display means from being peeped.

### BACKGROUND OF THE INVENTION

ATMs (Automatic Teller Machines), PCs (Personal Computers), mobile phones and the like have display means such as CRTs and LCDs, on which information is displayed. Such a display device having the display means should prevent personal information and confidential information from being peeped by an unrelated person. In particular, portable display devices such as mobile phones are often used in the presence of other people, and hence the devices are at risk for being peeped.

To solve this problem, Japanese Laid-Open Patent Application No. 2004-264796 (published on September 24, 2004) and Registered Utility Model No. 3058477 (registered on June 18, 1999) disclose such an arrangement that a peep-proof optical film is attached on the display screen of a mobile phone.

According to the conventional arrangement, however, it is necessary to attach the optical film when peep prevention is required, while the film is removed when peep prevention is unnecessary. These operations are burdensome to the user. Moreover, when the optical film is attached, the visibility of the screen decreases. Also, since the peep-proof optical film makes it difficult to view the display screen from an oblique direction, peeping from behind the user is not effectively prevented. Moreover, the optical film attached to a large-size display screen of, for example, ATMs and PCs must also be large. Such a large optical film is costly.

### SUMMARY OF THE INVENTION

The present invention was done to solve the above-described problem. The objective of the present invention is to provide a display device that can achieve peep prevention without bothering the user, a control method of the display device, an electronic device including the display device, a display device control program, and a recording medium recording the display device program.

To achieve the objective above, a display device of the present invention is characterized by including: display means; image taking means for taking an image of at least a part of an area from which information displayed on the display means is viewable; face detection means for detecting a human face in the image taken by the image taking means; face number counting means for counting how many human faces are detected by the face detection means; and peep prevention means for performing an operation to prevent the information from being peeped, if the face number counting means counts more than one human face.

Examples of the peep prevention are as follows: cause the display means to stop display; display a predetermined non-confidential image on the display screen of the display means; display an image, which indicates that peeping is underway, on at least a part of the display screen; and narrow the viewing angle of the display means. If the display device is further provided with notification means such as a speaker and a vibrator, the notification may be made by sound and/or vibration.

According to the arrangement above, a human face is detected in the image taken by the image taking means, and the number of detected human faces is counted. If a plurality of human faces are counted, it is determined that more than one person view the displayed information. In such a case, peeping of the information by an unrelated person is likely to be in progress. The peep prevention is therefore performed in a case where a plurality of human faces are counted. Since the peep prevention in the present invention is automatically performed based on the taken image, it is unnecessary to attach/remove an optical film, so as to save the effort of the user.

To achieve the objective above, a method for controlling a display device which includes display means and image taking means for taking an image of at least a part of an area from which information displayed on the display means is viewable is characterized by including the steps of: detecting a human face in the image taken by the image taking means; counting how many human faces are detected; and if more than one human face is counted, performing an operation to prevent the information from being peeped.

According to the arrangement above, a human face is detected in the image taken by the image taking means, and the number of detected human faces is counted. If a plurality of human faces are counted, it is determined that more than one person view the displayed information. In such a case, peeping of the information by an unrelated person is likely to be in progress. The peep prevention is therefore performed in a case where a plurality of human faces are counted. Since the peep prevention in the present invention is automatically performed based on the taken image, it is unnecessary to attach/remove an optical film, so as to save the effort of the user.

Additional objects, features, and strengths of the present invention will be made clear by the description below. Further, the advantages of the present invention will be evident from the following explanation in reference to the drawings.

### BRIEF DESCRIPTION OF THE DRAWINGS

Fig. 1 is a flowchart showing steps of a process performed by an ATM of an embodiment of the present invention.
Fig. 2 is an oblique perspective view showing the appearance of the ATM.
Fig. 3 is a block diagram roughly illustrating the ATM.
Fig. 4 is a block diagram related to the ATM and illustrating an arrangement for controlling a display section based on an image taken by a security camera.
Fig. 5(a) is an oblique perspective view showing the ATM and the user, in a case where only one user is at the position to operate the ATM and the vicinity of that position.
Fig. 5(b) shows the taken image in the case where only one user is at the position to operate the ATM and the vicinity of that position.
Fig. 6(a) is an oblique perspective view showing the ATM, the user, and an unrelated person, in a case where the user and the unrelated person are at the position to operate the ATM and the vicinity of that position.
Fig. 6(b) shows the taken image in the case where the user and the unrelated person are at the position to operate the ATM and the vicinity of that position.
Fig. 7 is a block diagram roughly illustrating a PC of another embodiment of the present invention.
Fig. 8 is a block diagram related to the PC and showing an arrangement for controlling a speaker based on an image taken by a security camera.
Fig. 9 is a flowchart showing steps of a process performed by the PC.
Fig. 10 is a front view illustrating the appearance of a mobile phone of a further embodiment of the present invention.
Fig. 11 is a block diagram roughly illustrating the mobile phone.
Fig. 12 is a block diagram related to the mobile phone and showing an arrangement for controlling a speaker based on an image taken by a security camera.
Fig. 13(a) shows an essential part of Fig. 10, and illustrates a case where image display is stopped for peep prevention.
Fig. 13(b) shows the essential part of Fig. 10, and illustrates a case where a predetermined image is displayed for peep prevention.
Fig. 13(c) shows the essential part of Fig. 10, and illustrates a case where a word "Who?" is displayed in a predetermined area of the screen, as an example of a warning message that indicates the presence of a peeper.
Fig. 14 is a flowchart showing steps of a process performed by the mobile phone.
Fig. 15 is a flowchart showing steps of a process performed by an ATM of yet another embodiment of the present invention.

### DESCRIPTION OF THE EMBODIMENTS

### [Embodiment 1]

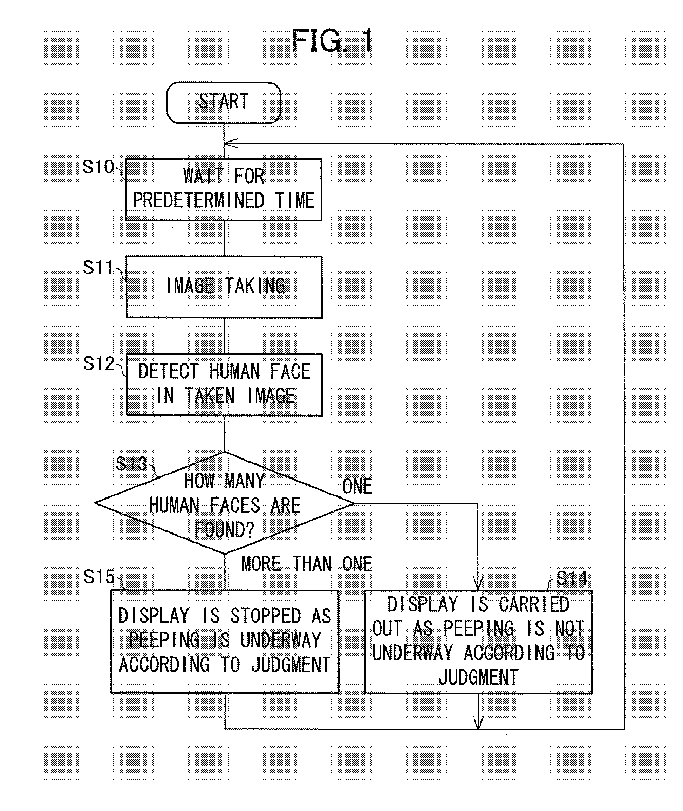

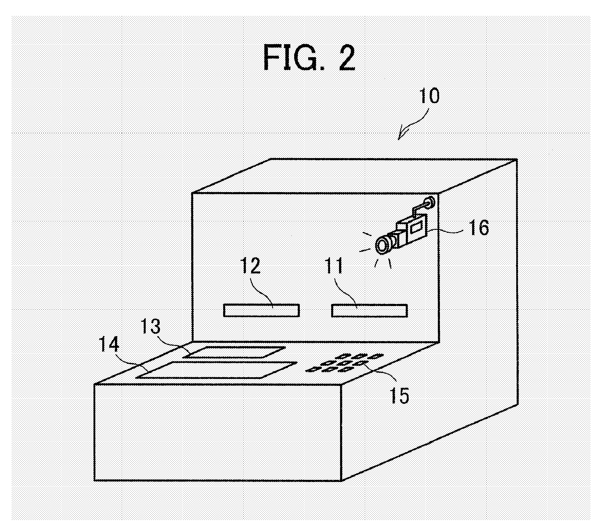

The following discusses an embodiment of the present invention in reference to Figs. 1-6. Fig. 2 shows the appearance of an ATM of the present embodiment. As shown in the figure, the ATM (display device, electronic device) 10 is provided with a card slot 11, a passbook slot 12, a cash tray 13, a touch panel 14, and a speaker 15. These members 11-15 are appropriately provided in consideration of user convenience.

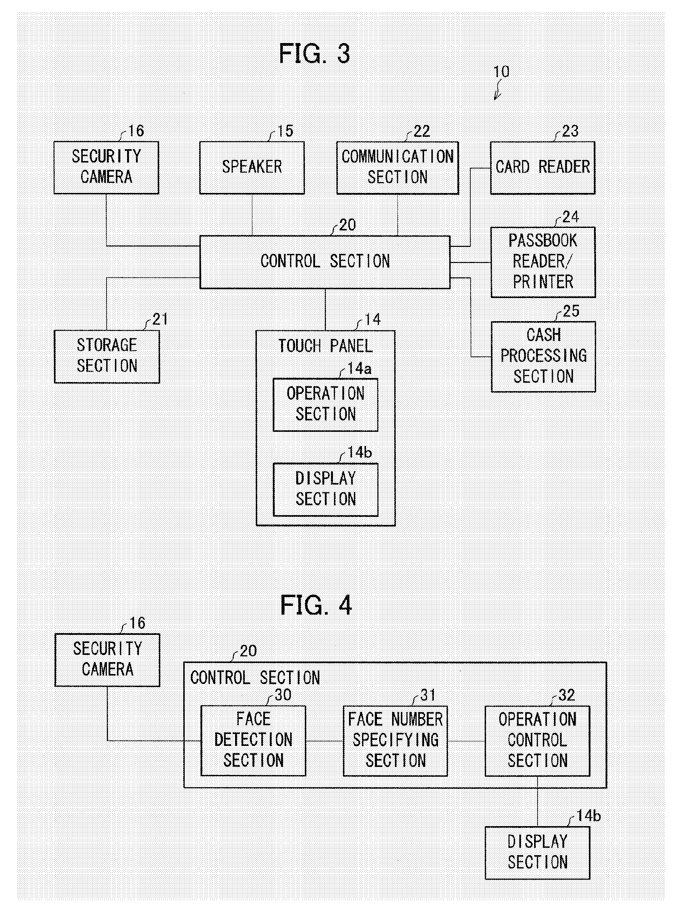

The card slot 11 is provided for inserting various types of cards. e.g. cash cards and credit cards that are necessary to operate the ATM 10. Inside the ATM 10, a card reader 23 (see Fig. 3) connected to the card slot 11 is provided. The passbook slot 12 is provided for inserting passbooks of banks and postal savings. Inside the ATM 10, a passbook reader/printer 24 (see Fig. 3) connected to the passbook reader 12 is provided. The cash tray 13 is an opening through which notes and coins are taken in and out. Inside the ATM 10, a cash processing section 25 (see Fig. 3) connected to the cash tray 13 is provided.

The touch panel 14 is arranged such that touch sensors are provided on the display screen of a flat panel display such as a liquid crystal display elements or a CRT (Cathode Ray Tube). The touch panel 14 displays various messages or the like for the user, and also receives instructions from the user as the user accordingly touches the display screen. In other words, the touch panel 14 functions as: an operation section 14a that receives an instruction from the user; and a display section 14b (display means, peep prevention means) that displays images. The speaker (peep prevention means) 15 outputs various voice messages and warning beeps.

The ATM 10 of the present embodiment is further provided with a security camera (image taking means) 16 that takes an image of a position to control the ATM 10 and the vicinity of that position. The ATM 10 counts human faces in an image taken by the security camera 16. If a plurality of human faces are included in the image, the ATM judges that peeping is in progress, so as to stop the image display on the touch panel 14.

The ATM 10 is typically operated by one user. On this account, when the taken image includes a plurality of human faces, peeping of the image displayed on the ATM 10 by an unrelated person is likely to be in progress. In such a case, in the present embodiment, the image display is stopped, and hence peeping is prevented without bothering the user. The security camera 16 may be away from the main body of the ATM 10 and capable of communicating with the ATM 10.

The following gives details of the ATM 10 of the present embodiment in reference to Figs. 1 and 3-6. Fig. 3 shows members of the ATM 10, which are under the control of a control section 20. As shown in the figure, the ATM 10 includes the touch panel 14, the speaker 15, the security camera 16, the control section 20, a storage section 21, a communication section 22, the card reader 23, the passbook reader/printer 24, and the cash processing section 25.

The control section 20 centrally controls the operations of the above-mentioned members of the ATM 10. The control section 20 includes, for example, a computer. The operations of the aforesaid members are controlled by causing the computer to execute a control program. This program may be read out from a removable medium such as a CD-ROM, or may be read out from a hard disk. Also, the program may be downloaded via the communication section 22 and installed in the hard disk.

The storage section 21 includes a non-volatile storage device such as the aforesaid hard disk. Examples of the sets of data stored in the storage section 21 are: the control program (including a program for detecting human faces and a program for counting detected human faces); an OS (Operating System) program; various types of programs other than them; operation setting values of the security camera 16; image data of taken images; and input text data. The operating setting values of the security camera 16 include a white balance determined before shipping or in maintenance, various parameters for image processing required for adjusting, for example, the brightness of a taken image, or the like.

The communication section 22 is provided for communicating with a server via a communication network. The communication section 22 converts the formats of various types of data, which are supplied from the control section 20, into data formats suitable for the data communication on the communication network. After the conversion, the communication section 22 sends the data to the communication network. Also, the communication section 22 converts the formats of various types of data, which are supplied from the communication network, into data formats suitable for the data transfer inside the device. After the conversion, the communication section 22 sends the data to the control section 20.

The card reader 23 reads out, from a magnetic tape or IC chip in a card, various types of information such as a check code and an ID number such as an account number. The card reader 23 converts the information thus read out into digital data, and sends the digital data to the control section 20.

The passbook reader/printer 24 reads out, from a magnetic tape in an account passbook or savings passbook, various types of information such as a check code and an ID number such as an account number. The passbook reader/printer 24 converts the information thus read out into digital data, and sends the data to the control section 20. Also, the passbook reader/printer 24 receives, from the control section 20, various types of data to be written in the passbook. Examples of such data are a history of money received, a history of money taken, and a history of an outstanding balance. The passbook reader/printer 24 prints the data on the passbook.

The cash processing section 25 deals with cash receipt and payment, counting, and change. More specifically, for cash receipt, the cash processing section 25 counts the cash supplied through the cash tray 13, and sends the cash amount data generated as a result of the counting to the control section 20, while the cash processing section 25 transports the supplied cash to a cash storage (not illustrated). For cash payment, the cash processing section 25 transports cash corresponding to cash amount data which is supplied from the control section 20. Then the cash processing section 25 counts the transported cash, and checks whether or not the counted amount matches with the cash amount data.

Fig. 4 gives details of the control section 20. More specifically, the figure relates to the operation to control the display section 14b, based on a taken image supplied from the security camera 16. As Fig. 4 shows, the control section 20 includes a face detection section (face detection means) 30, a face number specifying section (face number counting means) 31, and an operation control section (peep prevention means) 32.

The face detection section 30 searches a taken image for parts assumed as human faces, based on taken image data supplied from the security camera 16. The face number specifying section 31 counts human faces in the parts detected by the face detection section 30. The detection and counting of human faces may be carried out using well-known face recognition technologies which detect flesh-colored parts, face contour, facial characteristics, or the like.

Based on the number of human faces counted by the face number specifying section 31, the operation control section 32 controls the operation of the display section 14b. More specifically, in a case where there is only one human face, the operation control section 32 causes the display section 14b to perform display output, meanwhile, in a case where there are a plurality of human faces, the operation control section 32 causes the display section 14b to stop display output.

Fig. 1 shows steps of a process performed by the above-described ATM 10. As shown in the figure, after a predetermined waiting time (step S10; hereinafter, a step may be referred to as, for example, "S10" at times), the security camera 16 takes an image (S11). Subsequently, the face detection section 30 detects human faces in the image taken by the security camera 16 (S12).

Then the face number specifying section 31 counts the human faces detected by the face detection section 30, and judges whether the number of human faces is more than one or not (S 13). If the number of human faces is one, the operation control section 32 judges that peeping is not underway. Therefore the operation control section 32 causes the display section 14b to perform display (S14) Thereafter, the above-described steps are repeated from S10.

Meanwhile, if the number of human faces is more than one, the operation control section 32 judges that peeping is underway. Therefore the operation control section 32 causes the display section 14b to stop display (S15). Thereafter, the above-described steps are repeated from S10.

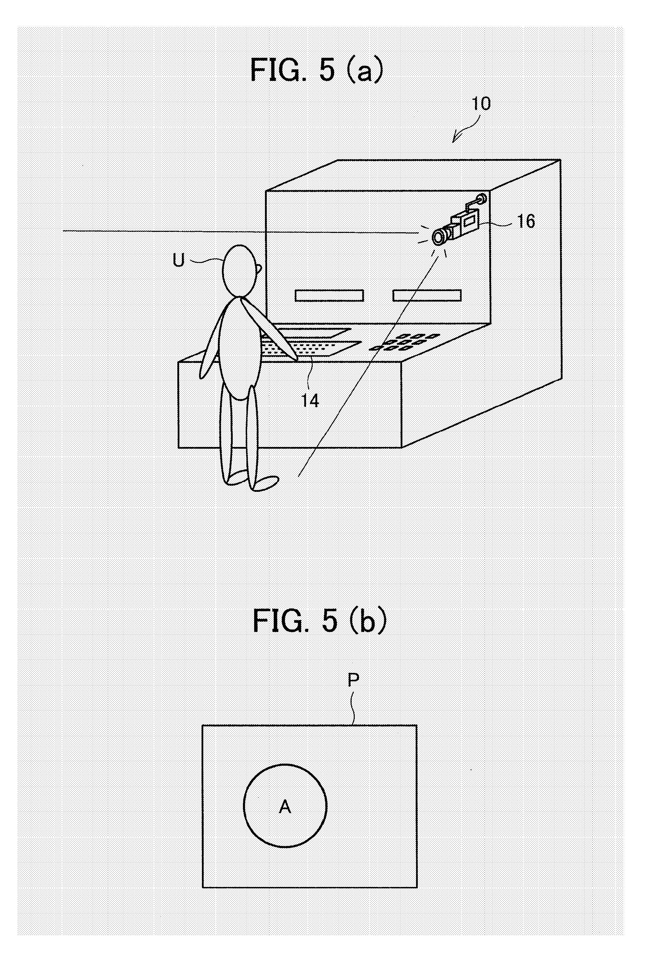

Figs. 5(a) and 5(b) show a case where only one user is at the position to operate the aforesaid ATM 10 and the vicinity of that position. Fig. 5(a) shows the ATM 10 and the user U, while Fig. 5(b) shows a taken image P. As shown in Fig. 5(b), in this case the image P taken by the security camera 16 includes only a human face A of the user U. Therefore, the ATM 10 performs normal display on the touch panel 14, as shown in Fig. 5(a).

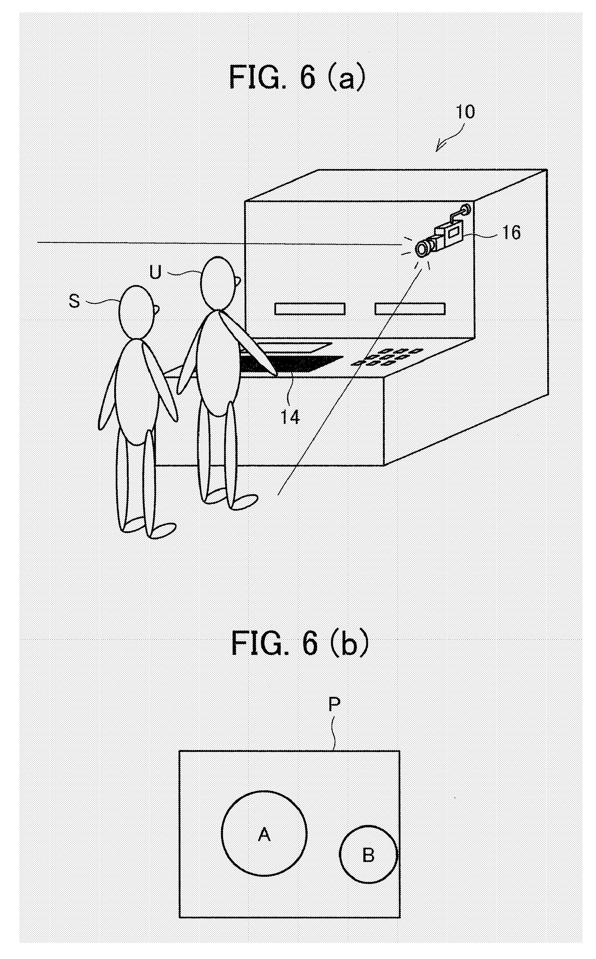

In the meanwhile, Figs. 6(a) and 6(b) show a case where the user and an unrelated person are at the position to operate the above-described ATM 10 and the vicinity of that position. Fig. 6(a) shows the ATM 10, the user U, and the unrelated person S. Fig. 6(b) shows a taken image P. In this case, the image P taken by the security camera 16 includes a human face A of the user U and a human face B of the unrelated person S, as shown in Fig. 6(b). Therefore the ATM 10 causes the touch panel 14 to stop display, as shown in Fig. 6(a).

As described above, the ATM 10 of the present embodiment automatically stops display output, if an image taken by the security camera 16 includes a plurality of human faces. It is therefore possible to achieve the peep prevention without bothering the user. Moreover, since the display section 14b of the touch panel 14 does not require a peep-proof optical filter, the visibility of the display section 14b does not deteriorate, and the cost increase in proportion to the size of the screen does not occur. Furthermore, even if an unrelated person is behind the user, peeping is prevented because a taken image includes the human face of the unrelated person.

In the present embodiment, the security camera 16 takes an image of the position where the user operates the ATM 10 and the vicinity of that position. The target of the image taking is preferably wider than this, for the prevention of peeping from wider angles. In the meanwhile, the effect of the present invention can be obtained when only a part of the region from which information displayed on the display section 14b of the touch panel 14 is viewable is targeted, because peeping from that part of the region is prevented.

### [Embodiment 2]

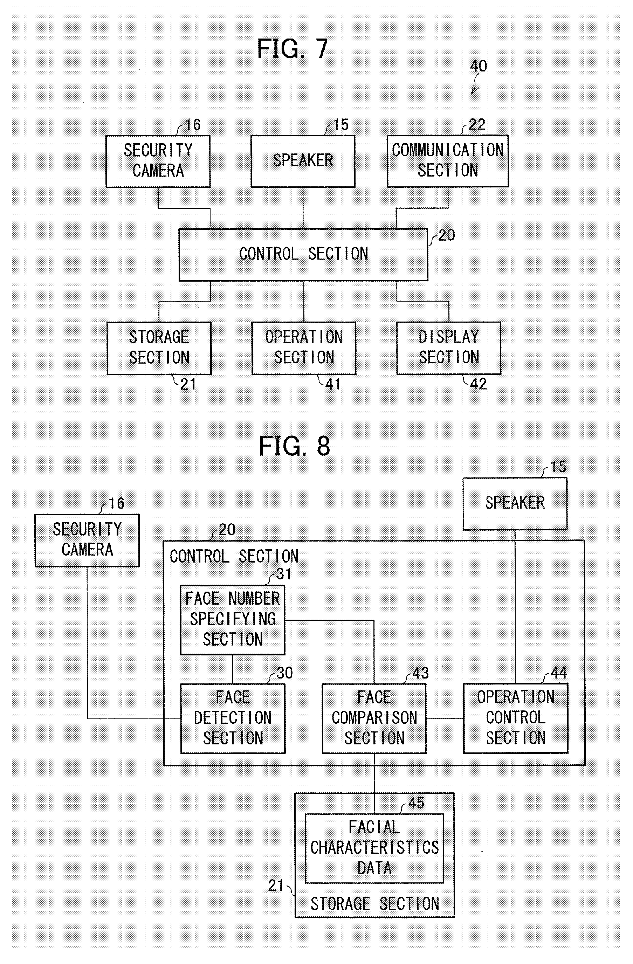

The following discusses another embodiment of the present invention in reference to Figs. 7-9. A PC of the present embodiment has a security camera that takes an image of the position to control the PC and the vicinity of that position. The PC counts human faces included in an image taken by the security camera. If the image includes a plurality of human faces, the PC compares these human faces with face information which has been registered in advance. If at least one of the human faces matches with the information, the PC causes a speaker to output warning beeps.

In computer systems and network systems, authorization for access to some files and directories may be set so that some users are prohibited to access to important files and data, for security purposes. However, information leaks may occur if a person who cannot access to a particular file can peep a PC terminal of a user who is authorized to open that file and views the same. Such a possibility is unfavorable in terms of security.

According to the present embodiment, face information of unauthorized users is registered in advance, and warning beeps are produced by a speaker if the human face of at least one of the unauthorized users is included in a taken image. This allows authorized users to be aware of potential peep, thereby preventing information leaks.

The following describes the PC and the operation thereof, in reference to Figs. 7-9. By the way, members and operations identical with those described in Embodiment 1 are given the same numbers, so that the descriptions are omitted for the sake of convenience.

Fig. 7 outlines a PC (display device, electronic device) 40 of the present embodiment. As shown in the figure, the PC 40 includes a speaker 15, a security camera 16, a control section 20, a storage section 21, a communication section 22, an operating section 41, and a display section (display means, peep prevention means) 42.

The operating section 41 receives various instructions from the user, and includes input buttons, keyboard, numeric keypad, a pointing device such as a mouse, touch panel, and other types of input devices. The operating section 41 converts information inputted by the user into operation data, and sends the data to the control section 20.

The display section 42 includes a display device such as a CRT (Cathode Ray Tube), LCD (Liquid Crystal Display), and plasma display. Based on display data supplied from the control section 20, the display section 42 displays various types of information such as texts and images.

Fig. 8 shows the details of the control section 20 and the storage section 21. More specifically, the figure shows the operation to control the speaker 15 based on an image taken by the security camera 16. As shown in the figure, the control section 20 includes a face detection section 30, a face number specifying section 31, a face comparison section (face comparison means) 43, and an operation control section (peep prevention means) 44. The storage section 21 stores at least one set of facial characteristics data 45 which includes facial characteristics information of a registered human face.

The face comparison section 43 extracts the facial characteristic information using a publicly-known face recognition technology, if the face number specifying section 31 detects more than one human face. The face comparison section 43 then compares the extracted characteristic information with the facial characteristic data 45 stored in the storage section 21. Thereafter the face comparison section 43 sends the result of the comparison to the operation control section 44. Examples of the face recognition technology are eigenface scheme, LFA (Local Feature Analysis), graph matching, neural network scheme, constrained mutual subspace scheme, perturbation space scheme, and frequency analysis.

The operation control section 44 controls the speaker 15, based on the result of the comparison by the face comparison section 43. More specifically, the operation control section 44 causes the speaker 15 to produce warning beeps if the characteristic information of at least one of the detected human faces matches with the facial characteristics data 45 stored in the storage section 21.

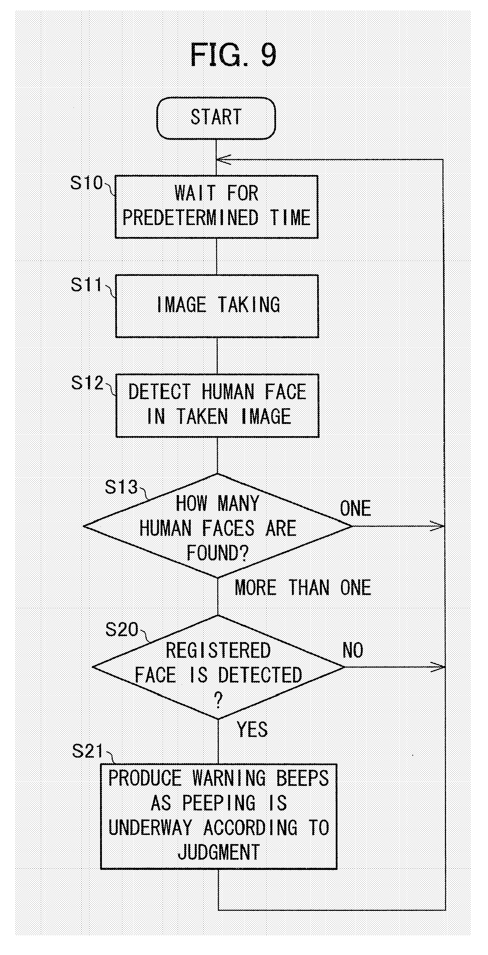

Fig. 9 shows steps of a process performed by the above-described PC 40. The steps in the present embodiment and the steps shown in Fig. 1 share the steps (S 10 to S13) in which the face number specifying section 31 specifies the number of human faces detected by the face detection section 30. These steps are therefore not described in this embodiment.

As shown in Fig. 9, if the number of detected human faces is one in the step S13, the steps from the step S10 are repeated because it is judged that peeping is not underway. Meanwhile, if the number of detected human faces is more than one in the step S 13, the face comparison section 43 extracts the characteristics information of the detected human faces, and checks if the extracted characteristics information matches with the facial characteristics information having been registered in advance (S20). If the information of the detected human faces does not match with the registered information, the peeping person is assumed as a user having been given authorization to access the file. Therefore the steps are repeated from the step S10. In the meanwhile, if the information of the detected human faces matches with the registered information, the peeping person is assumed as a peeper who is not authorized to access to the file. Therefore warning beeps are produced by the speaker (S21). Thereafter, the steps are repeated from the step **S10.**

### [Embodiment 3]

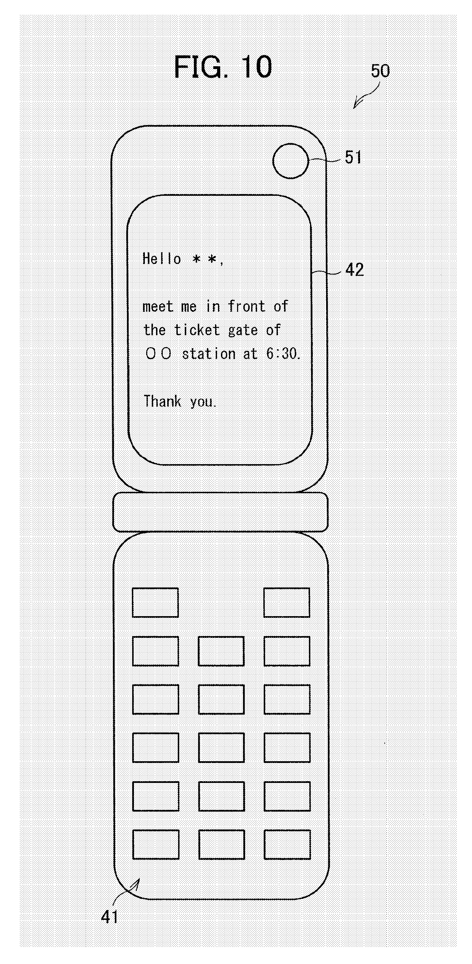

The following discusses a further embodiment of the present invention in reference to Figs. 10-14. By the way, members and operations identical with those described in Embodiments 1 and 2 are given the same numbers, so that the descriptions are omitted for the sake of convenience.

Fig. 10 outlines a mobile phone of the present embodiment. As shown in the figure, the mobile phone (display device, electronic device) 50 is arranged such that an operating section 41, a display section 42, and an image taking section 51 are provided on a main display side. The image taking section 51 takes an image of a position where the user looks at the display section 42 and an area in the vicinity of that position.

The mobile phone 50 of the present embodiment counts human faces included in an image taken by the image taking section 51. If a plurality of human faces are included, these human faces are compared with facial information having been registered in advance. A predetermined display operation for peep prevention is carried out if at least one of the detected human faces does not match with the registered facial information.

For example, facial information of people such as family members and friends, who are allowed to view information on the display section 42 of the mobile phone 50, is registered in advance. The mobile phone 50 counts human faces in an image taken by the image taking section 51. If a plurality of human faces are included in the image and at least one of those images does not match with the registered information, it is assumed that peeping by an unauthorized person is underway, and hence a predetermined display operation for peep prevention is carried out. This prevents an unauthorized person from peeping the displayed information.

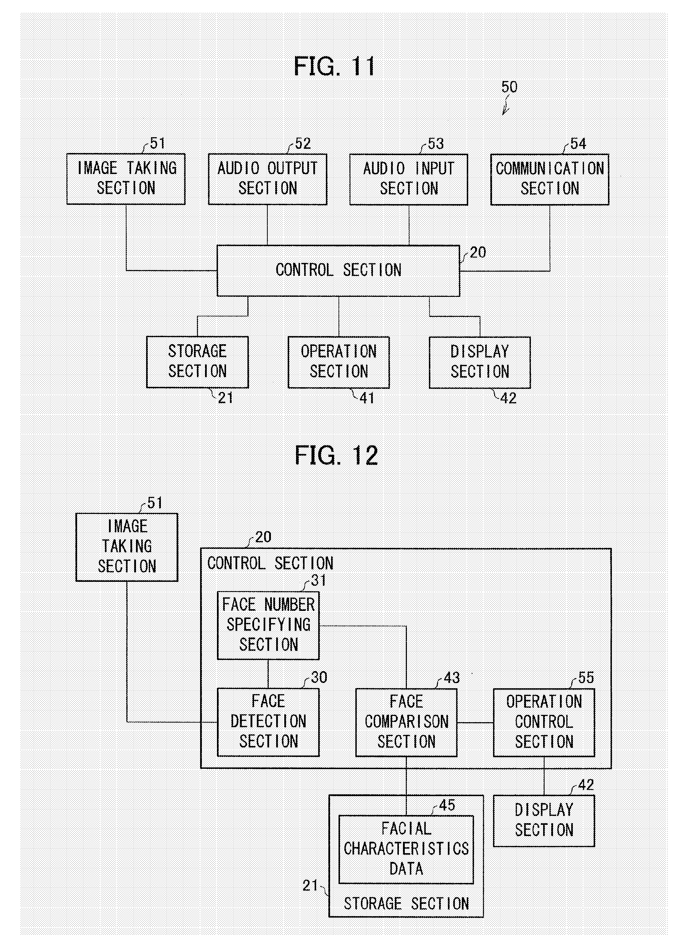

The following describes the mobile phone 50 of the present embodiment and steps of a process performed by the mobile phone 50, in reference to Figs. 11-14. Fig. 11 outlines the mobile phone 50 of the present embodiment. As shown in the figure, the mobile phone 50 includes a control section 20, a storage section 21, an operating section 41, a display section 42, an image taking section 51, an audio output section 52, an audio input section 53, and a communication section 54.

As described earlier, the image taking section 51 takes an image of a position where the user views the display section 42 and an area in the vicinity of that position. The image taking section 51 is provided with a digital camera including, for example, lenses, aperture, an image taking device, and the like. Examples of the image taking device include CCD (Charge Coupled Device) and CMOS (Complementary Metal-Oxide Semiconductor) image sensor. The image taking section 51 sends data of the taken image to the control section 20.

The audio output section 52 converts, into sound waves, audio data supplied from the control section 20, so as to output the sound waves to the outside. More specifically, the audio output section 52 includes a D/A converter, a speaker, an earphone, or the like.

Meanwhile, the audio input section 53 converts, into audio data, sound waves from the outside, so as to send the audio data to the control section 20. More specifically, the audio input section 53 includes a microphone, an A/D converter, and the like.

The communication section 54 wirelessly communicates with a base station of a mobile communication system. That is, the communication section 54 receives communication data from the control section 20, converts the format of the communication data into a format suitable for wireless communication, and sends electric waves to the base station. Also, the communication section 54 converts, into communication data, electric waves supplied from the base station, and sends the communication data to the control section 20.

Fig. 12 gives details of the control section 20 and the storage section 21. More specifically, the figure describes the operation to control the display section 42 based on an image taken by the image taking section 51. As shown in the figure, the control section 20 includes a face detection section 30, a face number specifying section 31, a face comparison section 43, and an operation control section (peep prevention means) 55. The storage section 21 stores the aforesaid facial characteristics data 45.

Based on the result of the comparison by the face comparison section 43, the operation control section 55 controls the operation of the display section 42. More specifically, if the face comparison section 43 judges that the characteristics information of at least one of the detected human faces does not match with the facial characteristics data 45 stored in the storage section 21, the operation control section 55 causes the display section 42 to perform a predetermined display operation for peep prevention.

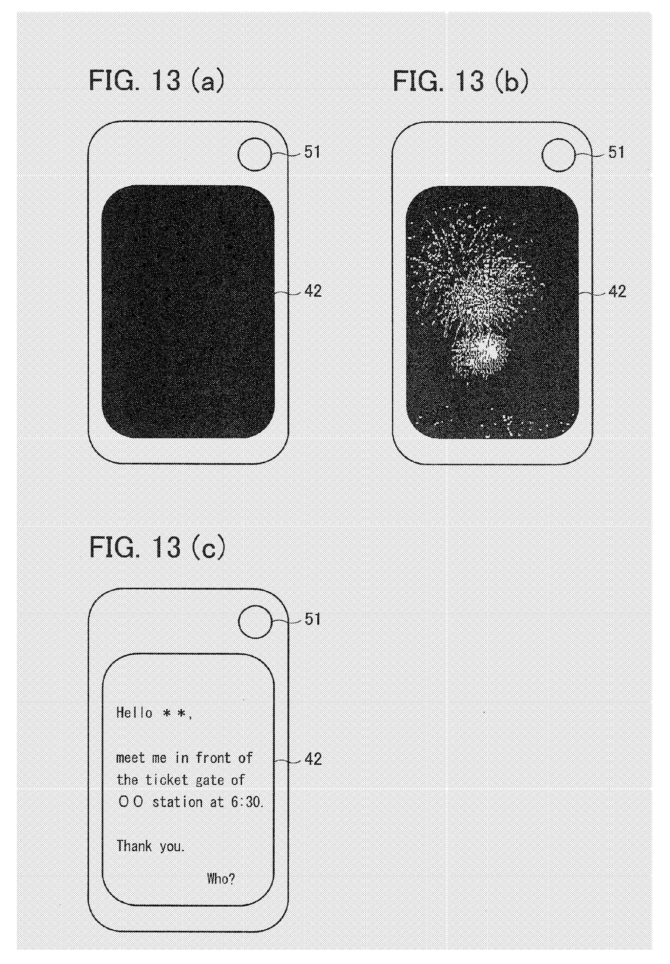

Figs. 13(a)-13(c) show display examples for peep prevention. Being similar to Fig. 6(a), Fig. 13(a) illustrates a state where the display section 42 has stopped display. This case is achieved by, for example, cutting off power supply to the display section 42 or, in a case of an LCD, turning off the backlight. Fig. 13 (b) shows a state where a predetermined image such as a standby display, which is not confidential information, is displayed on the display section 42.

Fig. 13(c) illustrates a case where, on the display section 42, a notification information for notifying the user of the presence of a peeper is displayed in a predetermined area of the screen. In the example in the figure, a word "Who" is displayed at the lower right corner of the screen. Alternatively, the notification information may be displayed on the entirety of the screen. Examples of the notification information include texts, symbols, and figures. The notification information may be conspicuously displayed so as to be obvious for the user, or may be inconspicuous so as to be hardly noticed by a peeper.

Another example of a predetermined display operation for peep prevention is as follows: a filter which can electrically change the viewable angle is provided on the display section 42, and the viewable angle is narrowed if peeping is underway. In this manner, there are various types of display operations for peep prevention.

If the mobile phone 50 has vibration capability, the presence of a peeper may be notified to the user by means of vibration. A combination of display and sound can promptly notify the user of the presence of a peeper.

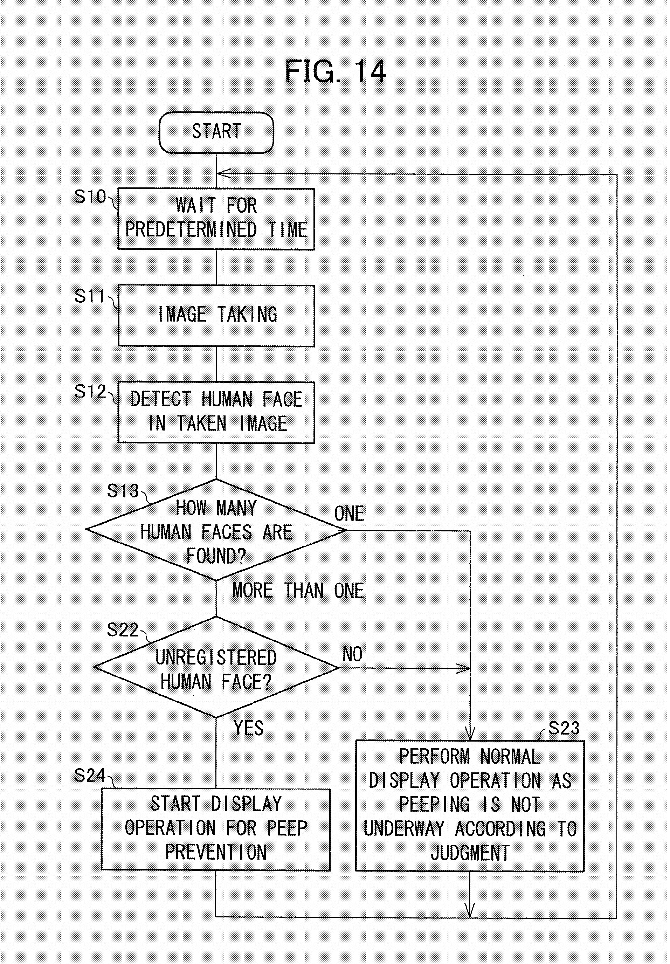

Fig. 14 shows steps of an operation carried out by the aforesaid mobile phone 50. The steps in the present embodiment and the steps shown in Fig. 1 share the steps (S 10 to S13) in which the face number specifying section 31 specifies the number of human faces detected by the face detection section 30. These steps are therefore not described in this embodiment.

As shown in Fig. 14, if the number of detected human faces is one in the step S13, the process goes to the step S23. In the meanwhile, if the number of detected human faces is more than one, the face comparison section 43 extracts the characteristics information of the detected human faces, and judges whether or not the extracted characteristics information is that of an unregistered human face (S22). If the information does not correspond to an unregistered human face, the process goes to the step S23. If the information corresponds to an unregistered human face, the process goes to the step S24.

In the step S23, it is determined that peeping is not underway, so that a normal display operation is carried out. On the other hand, in the step S24, it is determined that peeping is underway, so that the aforesaid predetermined display operation is carried out for peep prevention. After the step S23 or S24, the above-described steps are repeated from the step S10.

In the present embodiment, the image taking section 51 takes an image of a position where the user views the display section 42 and the vicinity of that position. Widening the target of the image taking is preferable because peeping from a wider angle is prevented. In the meanwhile, the effect of the present invention can be obtained when only a part of the region from which information displayed on the display section 42 of the touch panel 14 is viewable is targeted, because peeping from that part of the region is prevented.

### [Embodiment 4]

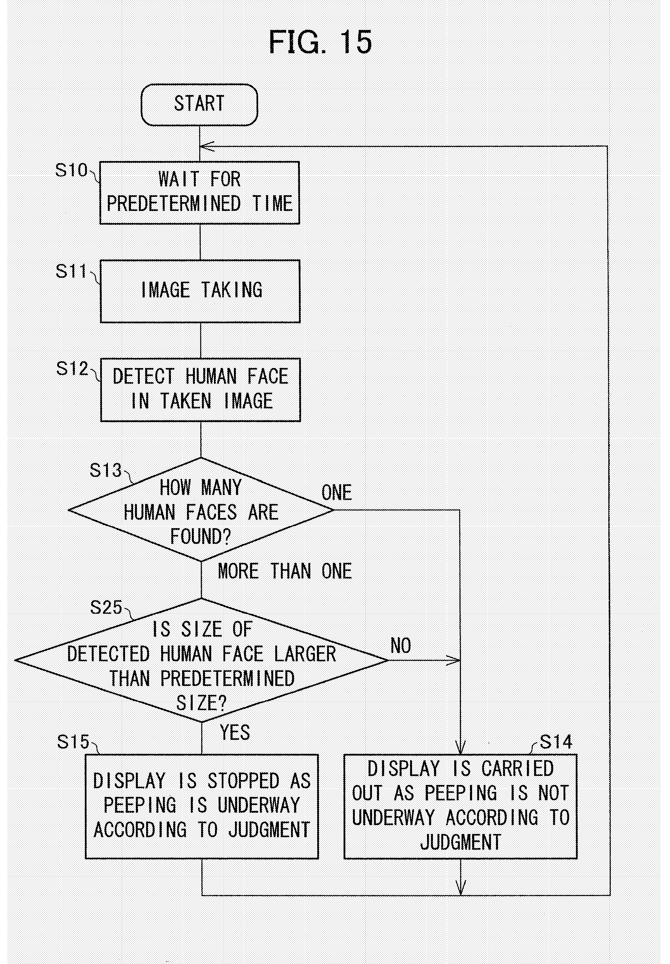

The following discusses yet another embodiment of the present invention in reference to Fig. 15. An ATM 10 of the present embodiment is identical with the ATM 10 shown in Figs. 1-6, except that an additional operation is added to the operation to control the display section 14b based on an image taken by the security camera 16. By the way, members and operations identical with those described in Embodiments above are given the same numbers, so that the descriptions are omitted for the sake of convenience.

Fig. 15 shows steps of a process performed by the above-described mobile phone 50. The steps in the present embodiment is identical with those shown in Fig. 1, except that an additional step is provided for a case where the number of detected human faces is more than one.

In the step S13, if the number of detected human faces is more than one, the face number specifying section 31 judges whether or not the size of each human face is not smaller than a predetermined size (S25). This predetermined size is generally that of the face of an aforesaid unrelated person S, in a case where the information displayed on the touch panel 14 is at the furthest viewable point from the unrelated person S. Concrete figures of the predetermined size vary with (i) an area where the information displayed on the touch panel 14 is at the furthest viewable point; (ii) the distance between the unrelated person S in that area and the security camera 16; and (iii) an image taking range and resolution of the security camera 16.

In the step S25, if the human face is smaller than the predetermined size, the operation control section 32 judges that the unrelated person S whose image is taken by the security camera 16 cannot view the information displayed on the touch panel 14. Therefore the operation control section 32 causes the display section 14b to perform display (S14), as in the case where the number of detected human faces is one. Subsequently, the above-described steps are repeated from the step S10.

In the meanwhile, in the step S25, if the human face is not smaller than the predetermined size, the operation control section 32 judges that the unrelated person S can view the information displayed on the touch panel 14. Therefore the operation control section 32 causes the display section 14b to stop displaying the information (S15). Subsequently, the above-described steps are repeated from the step S10.

Because of the above, in the ATM 10 of the present embodiment, it is possible to prevent such an erroneous decision that peeping is underway even though an unrelated person is too distant from the ATM 10 to peep.

The present invention is not limited to the description of the embodiments above, but may be altered by a skilled person within the scope of the claims. An embodiment based on a proper combination of technical means disclosed in different embodiments is encompassed in the technical scope of the present invention.

For example, the face number specifying section 31 may not count the human faces in a taken image, which are outside a predetermined area. An example of such a predetermined area is an area where peeping is highly probable, e.g. an area obliquely behind the user. According to this arrangement, the operation for peep prevention is properly carried out because human faces in an area where peeping is improbable to occur are excluded from the counting.

Also, the following arrangement may be adopted: the face detection section 30 detects the orientation of each human face in a taken image, and the face number specifying section 31 excludes, from the counting, the human faces which do not look at the display section 14b or 42. According to this arrangement, the operation for peep prevention is properly carried out, because human faces of people who are unlikely to be peepers are excluded from the counting.

In Embodiments above, the operation control section 32, 44, or 55 carries out the control for peep prevention. Alternatively, the operation control section may allow the user to use only specific functions unrelated to confidential information, by locking some operation buttons.

The blocks in the control section 20 of the ATM 10, PC 40, or mobile phone 50 may be realized by hardware logic. Alternatively, the blocks may be realized by software, with the use of a CPU as follows.

That is, the control section 20 may include members such as: a CPU that executes instructions of a control program realizing the functions; a ROM recording the program; a RAM on which the program is executed; and a storage device (recording medium) such as a memory, which stores the program and various kinds of data. The objective of the present invention can be achieved in the following manner: program code (e.g. an executable code program, intermediate code program, and source program) of the control program of the control section 20, the control program being software for realizing the functions, is recorded on a recording medium in a computer-readable manner, this recording medium is supplied to the control section 20, and the computer (or CPU or MPU) reads out the program code from the recording medium and execute the program.

Examples of such a recording medium include a tape, such as a magnetic tape and a cassette tape; a magnetic disk, such as a flexible disk and a hard disk; a disc including an optical disc, such as a CD-ROM/MO/MD/DVD/CD-R; a card, such as an IC card (inclusive of a memory card); and a semiconductor memory, such as a mask ROM, an EPROM (Erasable Programmable Read Only Memory), an EEPROM (Electrically Erasable Programmable Read Only Memory), or a flash ROM.

Alternatively, the control section 20 may be capable of being connected to a communications network, allowing the program code to be supplied via the communications network. Non-limiting examples of the communications network include the Internet, intranet, extranet, LAN, ISDN, VAN CATV network, virtual private network, telephone network, mobile communications network, and satellite communications network. Non-limiting examples of the transmission media composing the communications network are, wired media such as IEEE 1394, USB, power line communication, cable TV lines, telephone lines, and ADSL lines, infrared light such as IrDA and remote controller, electric waves such as Bluetooth®, IEEE802.11, HDR, mobile telephone network, satellite connection, and terrestrial digital broadcasting network. It is also noted the present invention may be realized by a carrier wave or as data signal sequence, which are realized by electronic transmission of the program code.

As described above, the display device of the present invention detects human faces in a taken image, and carries out the operation to prevent displayed information from being peeped if the number of the detected human faces is more than one. For this reason, the present invention can be used for not only ATMs, PCs, and mobile phones but also any electronic devices which may display confidential information.

As described above, a display device of the present invention is characterized by including: display means; image taking means for taking an image of at least a part of an area from which information displayed on the display means is viewable; face detection means for detecting a human face in the image taken by the image taking means; face number counting means for counting how many human faces are detected by the face detection means; and peep prevention means for performing an operation to prevent the information from being peeped, if the face number counting means counts more than one human face.

According to the arrangement above, a human face is detected in the image taken by the image taking means, and the number of detected human faces is counted. If a plurality of human faces are counted, it is determined that more than one person view the displayed information. In such a case, peeping of the information by an unrelated person is likely to be in progress. The peep prevention is therefore performed in a case where a plurality of human faces are counted. Since the peep prevention in the present invention is automatically performed based on the taken image, it is unnecessary to attach/remove an optical film, so as to save the effort of the user.

The display device of the present invention preferably further includes face comparison means for comparing characteristics of the human face detected by the face detection means with characteristics of one or more human face which have been registered in advance, in a case where the face number counting means counts more than one human face, peep prevention means performing the operation based on a result of comparison by the face comparison means.

More specifically, the peep prevention means preferably performs the peep prevention for the displayed information, in a case where (i) a plurality of human faces are counted and (ii) as a result of the comparison, at least one of the human faces thus detected matches with one of the registered human faces. In this case, it is possible to prevent the displayed information from being peeped by an unfavorable person, by registering the face of such an unfavorable person in advance.

Also, the peep prevention means preferably performs the peep prevention for the displayed information, in a case where (i) a plurality of human faces are counted and (ii) as a result of the comparison, at least one of the human faces thus detected disagrees with the registered human faces. In this case, faces of people who are allowed to view the information are registered in advance. On this account, while the allowed people can view the information together, the information is not peeped by an unregistered person.

The display device of the present invention is preferably arranged such that the face number counting means excludes, from counting, such a human face that is smaller in size than another human face (i) which is in the area from which information displayed on the display means is viewable and (ii) which is at a point furthest from the image taking means. In this case, it is possible to prevent such an erroneous decision that peeping is underway even though an unrelated person is in an area from which the information is not viewable.

The display device of the present invention is preferably arranged such that the face number counting means excludes, from counting, such a human face that is outside the area. In this case, the area is, for example, an area obliquely behind the user, where peeping is likely to occur. Since human faces in the area where peeping is unlikely to occur are excluded from the counting, the peep prevention is properly carried out.

The display device of the present invention is preferably arranged such that the face detection means detects an orientation of the human face thus detected, and the face number counting means excludes, from counting, a human face which turns away from the display means. A person who turns away from the display means is unlikely to peep the information. Since human faces of people who are unlikely to peep the information are excluded from the counting, the peep prevention is properly carried out.

It is noted that an electronic device including the above-described display device can achieve the aforesaid effects.

As described above, a method for controlling a display device which includes display means and image taking means for taking an image of at least a part of an area from which information displayed on the display means is viewable is characterized by including the steps of: detecting a human face in the image taken by the image taking means; counting how many human faces are detected; and if more than one human face is counted, performing an operation to prevent the information from being peeped.

According to the arrangement above, a human face is detected in the image taken by the image taking means, and the number of detected human faces is counted. If a plurality of human faces are counted, it is determined that more than one person view the displayed information. In such a case, peeping of the information by an unrelated person is likely to be in progress. The peep prevention is therefore performed in a case where a plurality of human faces are counted. Since the peep prevention in the present invention is automatically performed based on the taken image, it is unnecessary to attach/remove an optical film, so as to save the effort of the user.

The respective means of the above-described display device may be realized on a computer, by a display device control program. Also, it is possible to execute the display device control program on any computers, if the program is recorded onto a computer-readable recording medium.

As described above, the display device of the present invention detects human faces in a taken image. If a plurality of human faces are counted, the display device judges that peeping of the displayed information is underway, and hence the display device performs peep prevention. Therefore, it is unnecessary to attach/remove an optical film, so as to save the effort of the user.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. A display device (10, 40, 50), comprising:
display means (14b, 42);
image taking means (16, 51) for taking an image of at least a part of an area from which information displayed on the display means (14b, 42) is viewable;
face detection means (30) for detecting a human face in the image taken by the image taking means (16, 51);
face number counting means (31) for counting how many human faces are detected by the face detection means (30); and
peep prevention means (14b, 15, 32, 42, 44, 55) for performing an operation to prevent the information from being peeped, if the face number counting means (31) counts more than one human face.

2. The display device (10, 40, 50) as defined in claim 1, further comprising:
face comparison means (43) for comparing characteristics of the human face detected by the face detection means (30) with characteristics of one or more human face which have been registered in advance,
in a case where the face number counting means (31) counts more than one human face, peep prevention means (14b, 15, 32, 42, 44, 55) performing the operation based on a result of comparison by the face comparison means (43).

3. The display device (10, 40, 50) as defined in claim 2,
wherein,
the peep prevention means (14b, 15, 32, 42, 44, 55) performs the operation, if (i) the face number counting means (31) counts more than one human face, and (ii) the comparison confirms that at least one of human faces detected by the face detection means (30) matches with said one or more human face which have been registered in advance.

4. The display device (10, 40, 50) as defined in claim 2,
wherein,
the peep prevention means (14b, 15, 32, 42, 44, 55) performs the operation, if (i) the face number counting means (31) counts more than one human face, and (ii) the comparison confirms that at least one of human faces detected by the face detection means (30) disagrees with said one or more human face which have been registered in advance.

5. The display device (10, 40, 50) as defined in any one of claims 1-4,
wherein,
the face number counting means (31) excludes, from counting, such a human face that is smaller in size than another human face (i) which is in the area from which information displayed on the display means (14b, 42) is viewable and (ii) which is at a point furthest from the image taking means (16, 51).

6. The display device (10, 40, 50) as defined in any one of claims 1-5,
wherein,
the face number counting means (31) excludes, from counting, such a human face that is outside the area.

7. The display device (10, 40, 50) as defined in any one of claims 1-6,
wherein,
the face detection means (30) detects an orientation of the human face thus detected, and
the face number counting means (31) excludes, from counting, a human face which turns away from the display means (14b, 42).

8. An electronic device (10, 40, 50) comprising the display device (10, 40, 50) defined in any one of claims 1-7.

9. A method for controlling a display device (10, 40, 50) which includes display means (14b, 42) and image taking means (16, 51) for taking an image of at least a part of an area from which information displayed on the display means (14b, 42) is viewable,
the method comprising the steps of:
detecting a human face in the image taken by the image taking means (16, 51);
counting how many human faces are detected; and
if more than one human face is counted, performing an operation to prevent the information from being peeped.

10. A display device control program for operating the display device (10, 40, 50) defined in any one of claims 1-7,
the display device control program causing a computer to function as the respective means of the display device (10, 40, 50).

11. A computer-readable recording medium, recording the display device control program defined in claim 10.
